# EUROPEAN PATENT APPLICATION

(11) **EP 2 311 569 A1**
(43) Date of publication of application: **20.04.2011**
(21) Application number: 10187412.1
(22) Date of filing: 13.10.2010
(51) Int. Cl.: B02C 19/20, B02C 18/06, A01J 27/04, A47J 43/25

(54) **Device for moving a food product that can be fragmented, minced or grated**

(30) Priority: 13.10.2009 IT UD20090180
(71) Applicant: Gelmini, Antonio, 43030 Basilicanova Montechiarugolo (IT)
(72) Inventor: Gelmini, Antonio, 43030 Basilicanova Montechiarugolo (IT)
(74) Representative: Petraz, Gilberto Luigi

(57) **Abstract**

Device (10) for moving a food product which can be fragmented, minced or grated, usable in a machine (11) for fragmenting or mincing the food product. The machine (11) comprises a fragmentation or mincing tool (15) suitable to fragment or mince into a desired form a determinate compact mass of food product. The device (10) comprises a pneumatic conditioning member (20) disposed downstream of the fragmentation or mincing tool (15) with respect to the processing direction of the food product, so as to define a fluid-dynamic current in correspondence with the exit zone of the fragmentation or mincing tool (15), to suck up the fragmented or minced food product in order to discharge it completely from the fragmentation or mincing tool (15).

## Description

### FIELD OF THE INVENTION

The present invention concerns a device for moving a food product that can be fragmented, minced or grated, such as for example cheese, whether hard cheese or soft cheese, or food products such as chocolate, bread or others, starting from pieces, slivers or slices, of determinate sizes. In particular the present invention concerns the optimized movement of fragments of food product, for example exiting from a fragmentation or mincing unit.

### BACKGROUND OF THE INVENTION

It is known that, in order to mince, grate or reduce to fragments of small or very small sizes a food product such as for example cheese, chocolate, bread or others, automatic or semi-automatic machines are used, provided with a fragmentation or mincing tool, against which a piece or slice of the food product is thrust.

Normally, the fragmentation or mincing tool comprises at least a drum formed by a curved metal sheet provided with holes with ridged radial tips, blades with cutting edges or other, and able to rotate to perform a stripping, grating or cutting action on the food product, reducing it to fragments of the desired size.

The rotation of the drum generates, around it, a plurality of turbulent currents which keep in suspension part of the fragments of the food products already grated or minced.

Instead of falling on transport elements, such as belts or screws, normally provided downstream of the fragmentation or mincing member, this part in suspension is deposited elsewhere, thus reducing the actual delivery of the transport elements.

Therefore, in known solutions, losses of load of the food product may occur at exit, compared to the quantity of food product at entry.

Furthermore, the part of the food product already fragmented or minced and remaining in suspension, is deposited elsewhere and accumulates on internal parts of the machine, thus making it necessary to carry out frequent cleaning and maintenance operations, with consequent production downtimes and increased management costs.

Purpose of the present invention is to achieve a device for moving a food product that can be fragmented, minced or grated, able to prevent the food product, once fragmented, from remaining partly suspended due to the effect of the turbulence generated by the fragmentation or mincing tools.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purpose, a device for moving a food product that can be fragmented, minced or grated, according to the present invention is applied to a machine for fragmenting or mincing said food product, wherein said machine comprises at least a fragmenting or mincing tool suitable to fragment or mince into a desired form a determinate compact mass of food product.

According to a characteristic feature of the present invention, the device comprises a pneumatic conditioning member disposed downstream of the fragmentation or mincing tool with respect to the processing direction of the food product, and able to define a fluid-dynamic current in correspondence with the exit zone of the fragmentation or mincing tool.

The fluid-dynamic current thus generated is such that it sucks in the food product processed, so as to discharge it completely from the fragmentation or mincing tool.

In this way, the pneumatic conditioning member defines a determinate pneumatic condition immediately downstream of the fragmentation or mincing tool, overcoming the action of the turbulent currents that are generated with the operative movement of the fragmentation or mincing tool.

With the present invention, substantially the whole mass of food product processed is quickly moved by the current generated by the pneumatic conditioning member, preventing part of it from remaining in suspension.

Therefore, losses of load of the food product are prevented at exit, compared with the quantity of food product at entry.

Furthermore, since there is substantially no mass in suspension of the food product processed, the latter is prevented from depositing on the internal parts of the machine, thus reducing the frequency of cleaning and maintenance operations and also the management costs.

Advantageously, the pneumatic conditioning member is disposed in a direction of discharge of the food product processed. In a variant solution, the pneumatic conditioning member is suitable to generate a depression downstream and at exit from the fragmentation or mincing tool.

According to a variant, the pneumatic conditioning member is conformed so as to effect at least another fragmentation or mincing action on the food product.

According to a variant, the pneumatic conditioning member comprises at least a rotary element with blades, like a ventilator, which not only generates a depression current in correspondence with the exit zone of the fragmentation or mincing tool, but also effects an action of fragmentation, slicing and crumbling of the food product, already processed, passing through it.

According to another variant, the pneumatic conditioning member is disposed below the fragmentation or mincing tool, and is conformed to generate the fluid-dynamic current in correspondence with the exit zone of the fragmentation or mincing tool.

According to the invention, the pneumatic conditioning member comprises two or more rotary elements with blades disposed in the direction of discharge of the food product.

In this condition, also depending on the type of food product processed and the granulation to be obtained, it is possible to provide that the rotary elements with blades function as fragmentation or mincing tools proper, for the compact mass of food product.

Therefore, in this condition, the rotary elements with blades fragment, mince or grate the food product and immediately afterward, or substantially simultaneously, discharge it through the fluid-dynamic current generated.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional and partly sectioned view of a first form of embodiment of a machine for processing a food product to which the device according to the present invention is applied;
- fig. 2 shows a cross section of the device in fig. 1;
- fig. 3 shows an enlarged detail of fig. 2;
- fig. 4 shows an enlarged and sectioned detail of fig. 3;
- fig. 5 is a three-dimensional view of a variant of the machine in fig. 1;
- fig. 6 shows a cross section of the device in fig. 5.

To facilitate comprehension, the same reference numbers have been used, where possible, to identify common elements in the drawings that are substantially identical. It is understood that elements and characteristics of one form of embodiment can conveniently be incorporated into other forms of embodiment without further clarifications.

### DETAILED DESCRIPTION OF A PREFERENTIAL FORM OF EMBODIMENT

With reference to the attached drawings, a device 10 according to the present invention is able to move, by means of a fluid-dynamic current, a determinate mass of food product that can be fragmented, minced or grated, in this case cheese, in order to discharge the fragments of the cheese at the end of the fragmentation, grating or mincing operations in an optimum manner.

In particular, the device 10 according to the present invention is applied to a machine 11, for the fragmentation, mincing or grating of cheese, of the type having at least a fragmentation or mincing station 12, and a transfer pipe 13, able to transport the grated cheese toward a subsequent operating station, for example a sieving or packing station or other.

In this case, the device 10 is mounted downstream of the fragmentation or mincing station 12, which is suitable to carry out a fragmentation or mincing step in which a plurality of pieces or slices of cheese, or whole cheeses, are fragmented as desired.

To describe the attached drawings more clearly, the fragmentation or mincing station 12 comprises a loading tube 14, through which the pieces, slices or whole cheeses to be processed are introduced, a fragmentation or mincing drum 15 mounted rotary in a fragmentation or mincing tank 16 and provided externally with cutting members, not shown in detail, and a funnel 19 to discharge the processed cheese, the funnel 19 being open toward the device 10.

In the fragmentation or mincing station 12 the pieces, slices or whole cheeses are introduced through the loading tube 14 into the fragmentation or mincing tank 16, pressed by means of a thrust actuator 18 against an external surface of the fragmentation or mincing drum 15 so as to make a plurality of fragments of the desired shape and granulometry, according to the sizes and shape of the cutting members.

The device 10 according to the present invention comprises a suction member 20, in this case with blades 21, mounted operatively downstream of the fragmentation or mincing drum 15 with respect to the processing direction of the food product.

The suction member 20 is in fluid-dynamic communication with the fragmentation or mincing tank 16 through the funnel 19.

The suction member 20 is selectively actuated by means of a relative motor 22, for example pulsed, of the programmed or programmable type, so as to modify as desired the speed of rotation of the suction member 20.

According to a variant, not shown, the motor 22 is connected by means of a belt kinematism to the suction member 20, so as to selectively vary the transmission ratio of the rotation.

The disposition and inclination of the blades 21 is such that the rotation of the suction member 20 generates a current in correspondence with the funnel 19 and the current induces the fragments of food product minced by the fragmentation or mincing drum 15 to exit rapidly from the fragmentation or mincing tank 16.

In this way the turbulence generated by the fragmentation or mincing drum 15 is prevented from keeping part of the fragments in suspension inside the fragmentation or mincing tank 16 or inside the funnel 19.

According to a variant, the blades 21 of the suction member 20 are specifically conformed and disposed reciprocally so as to also perform an action of partial slicing of the fragments exiting from the fragmentation or mincing drum 15.

Advantageously, each blade 21 has a height comprised between about 150 mm and about 170 mm, so as to increase the production capacity of the suction member 20 and make it in any case higher than the productivity of the individual fragmentation or mincing drum 15.

This advantageous solution allows to eliminate possible blockages of the suction member 20, and to prevent possible interruptions to the action of the fragmentation or mincing drum 15, increasing the overall productivity of the machine 11 and reducing possible maintenance interventions.

In this solution it is therefore not necessary to provide a specific slicing roller, and it is also possible to mince and cut into bits the grains, slivers or flakes of cheese made by the fragmentation or mincing drum 15, reducing their granulometry and making them uniform.

In this case, the suction member 20 is disposed rotatable inside a truncated cone structure 23.

In particular, around the suction member 20, between the truncated cone structure 23 and the suction member 20, a granulation belt 25 is provided, having a plurality of bosses 26 or other similar cutting ridges, able to perform a granulation action on the slivers or flakes of cheese, in order to further reduce and uniform the granulometry thereof.

In fact, thanks to the centrifugal action exerted by the rotation of the blades 21 of the suction member 20, the slivers or flakes of cheese are thrust against the granulation belt 25 to be subjected to the granulation action of the bosses 26.

In particular, the bosses 26 comprise a cutting profile 26a to effect granulation, and a through hole 26b through which the granules of processed food product pass.

Advantageously, the orientation of the bosses 26 is discordant to the direction of rotation of the blades 21 of the suction member 20, so as to present their cutting profile 26a against the slivers or flakes of cheese thrust by the centrifugal force generated.

According to a variant, the granulation belt 25 is selectively replaceable by another granulation belt having bosses of a different shape and size, so that it is possible to obtain a different and specific granulation depending on the type of food product processed, on the use of the food, or other parameters chosen by the operator.

According to another variant, the machine 11 to which the device 10 according to the invention is applied can be integrated with or in any case associated with a sterile packing apparatus of a known type, or so-called "clean room", where the food product is packed in extremely sterile and aseptic conditions.

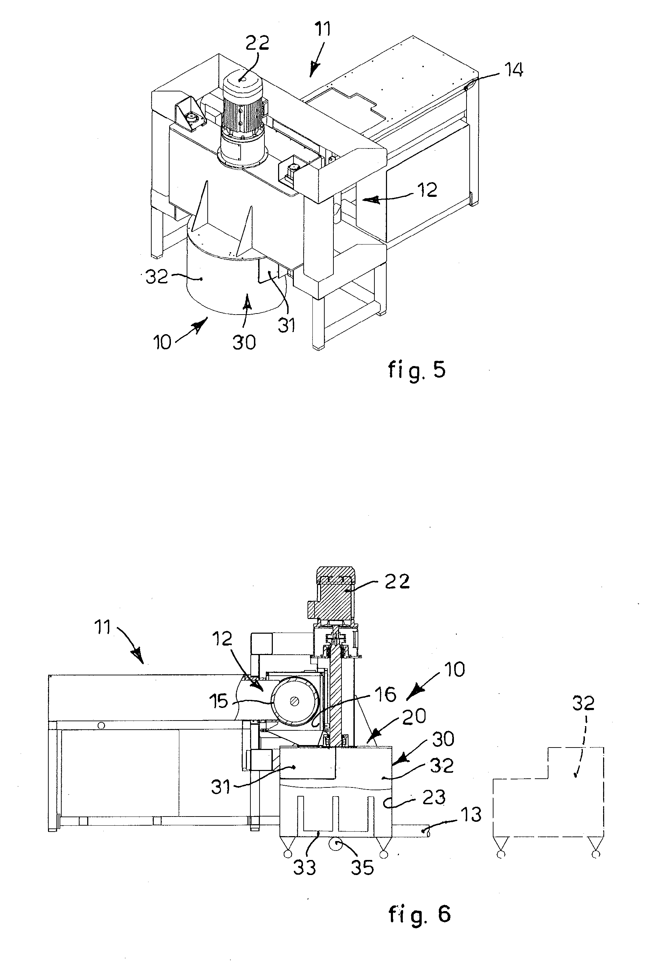

According to the variant shown in figs. 5 and 6, instead of the truncated cone structure 23 the device 10 comprises a cylindrical structure 30, in this case made with two guards, respectively an upper guard 31 attached to the machine 11, and a lower guard 32 mobile with respect to the upper guard 31.

The possibility of moving the lower guard 32 individually allows access inside the cylindrical structure 30, from a zone outside the machine 11, so as to carry out easily the operations to clean, sterilize and possibly maintain the cylindrical structure 30.

In the solution shown here, inside the cylindrical structure 30 a mixer with blades 33 is disposed rotatable, and effects a selective movement of the grated food product, so that the latter can easily be discharged through the transfer pipe 13, preventing infiltrations of air through the product itself.

The mixer with blades 33 is selectively made to rotate by a relative motor 35, so as to carry out one or more rotations in one direction and/or the other, with a determinate frequency, to prevent the grated product from amalgamating on the bottom of the cylindrical structure 30.

It is clear, however, that modifications and/or additions of parts may be made to the device 10 as described heretofore, without departing from the field and scope of the present invention.

For example, it comes within the field of the present invention to provide that inside the truncated cone structure 23, downstream of the granulation belt 25, a deflector wall 27 is provided, advantageously inclined, and suitable to condition the discharge of the processed food product through the transfer pipe 13.

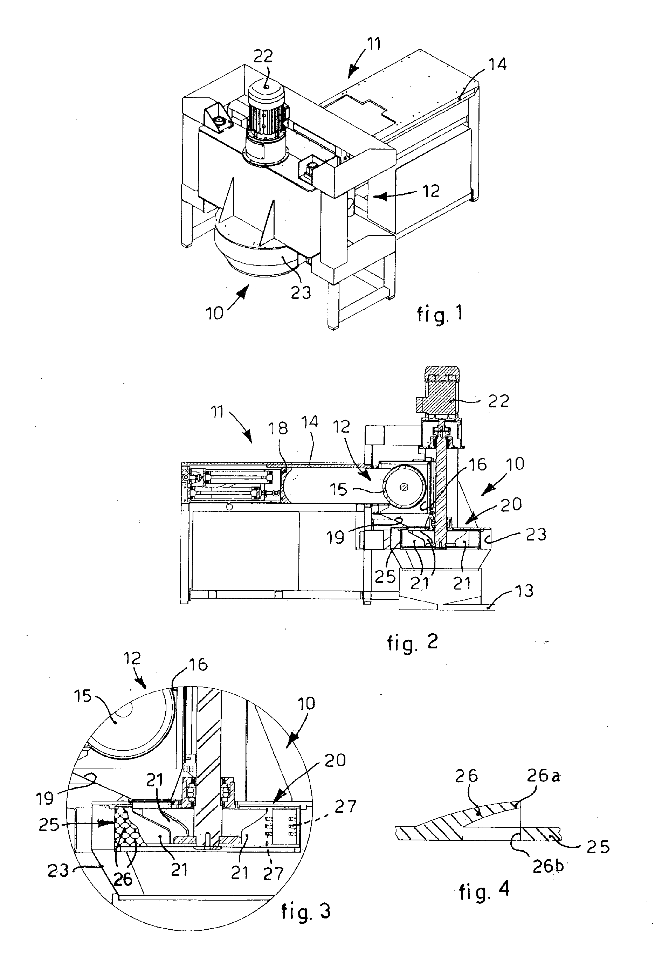

It also comes within the field of the present invention to provide that on the blades 21, in correspondence with an external edge thereof, a plurality of notches 27 are made, shown as a line of dashes in fig. 3, open toward the granulation belt 25 and able to define a substantially comb-like conformation of the blades 21.

This solution allows, in particular but not only, with very soft or particularly fatty food products, to avoid spreading such food products on the granulation belt 25.

In this way, the slices of the products can pass partly through the notches 27 and can be processed in succession a little at a time by all the blades 21, so they are not spread by the blades 21 on the granulation belt 25.

Advantageously, the notches 27 have a substantially inclined orientation, not orthogonal to the axis of rotation of the blades, so as to generate a particular pneumatic effect that improves the functioning conditions and passage of the slices of food product.

Furthermore, the notches 27 are conformed with cutting edges so as possibly to partly cut the slices of food product, thus further promoting the passage and progressive processing thereof on several blades 21.

It is also clear that, although the present invention has been described with reference to specific examples, a person of skill in the art shall certainly be able to achieve many other equivalent forms of device for moving a food product that can be fragmented, minced or grated,, having the characteristics as set forth in the claims and hence all coming within the field of protection defined thereby.

## Claims

1. Device for moving a food product which can be fragmented, minced or grated, usable in a machine (11) for fragmenting or mincing the food product, wherein said machine (11) comprises at least a fragmentation or mincing tool (15) suitable to fragment or mince into a desired form a determinate compact mass of food product, wherein the device comprises at least a pneumatic conditioning member (20) disposed downstream of said fragmentation or mincing tool (15) with respect to the processing direction of the food product, and able to define a fluid-dynamic current in correspondence with the exit zone of said fragmentation or mincing tool (15), so as to suck up the fragmented or minced food product in order to discharge it completely from the fragmentation or mincing tool (15), **characterized in that** the pneumatic conditioning member comprises two or more rotary elements (20) disposed in the direction of discharge of the food product.

2. Device as in claim 1, **characterized in that** the pneumatic conditioning member (20) is disposed in a discharge direction of the fragmented or minced food product and is suitable to generate a condition of depression downstream and at exit from the fragmentation or mincing tool (15).

3. Device as in any claim hereinbefore, **characterized in that** the pneumatic conditioning member (20) is conformed so as to carry out at least a further fragmentation or mincing of the food product.

4. Device as in any claim hereinbefore, **characterized in that** the pneumatic conditioning member (20) is disposed below the fragmentation or mincing tool (15).

5. Device as in any claim hereinbefore, **characterized in that** the pneumatic conditioning member (20) is disposed rotatable inside a truncated cone structure (23).

6. Device as in claim 5, **characterized in that** it comprises a granulation belt (25) disposed around the conditioning member (20), between the truncated cone structure (23) and said conditioning member (20), and is provided with a plurality of cutting ridges (26), able to carry out a granulation action on the food product already processed by the fragmentation or mincing tool (15), so as to reduce and make more uniform its granulometry.

7. Device as in claim 6, **characterized in that** each of the cutting ridges (26) comprises a cutting profile (26a) to carry out the granulation, and a through hole (26b) through which the granules of processed food product pass, and **in that** the orientation of each of said cutting ridges (26) is discordant from the direction of rotation of the blades (21) of the conditioning member (20).

8. Device as in claim 6 or 7, **characterized in that** the granulation belt (25) can be selectively replaced by another granulation belt (25) having the cutting ridges (26) of different shape and sizes, so as to obtain a different and specific granulation, depending on the type of food product processed, the food use or other parameters chosen by the operator.

9. Device as in any claim hereinbefore, **characterized in that** each blade (21) comprises a plurality of notches (27) open toward the granulation belt (25), and able to define a substantially comb-type conformation of said blades (21).
